# EUROPEAN PATENT SPECIFICATION

(11) **EP 4 369 487 B1**
(45) Date of publication and mention of the grant of the patent: **27.05.2026**
(21) Application number: 22941330.7
(22) Date of filing: 27.06.2022
(51) Int. Cl.: H01M 50/244, H01M 50/209, H01M 50/249, H01M 50/264

(54) **BATTERY AND ELECTRIC DEVICE**
BATTERIE UND ELEKTRISCHE VORRICHTUNG
BATTERIE ET DISPOSITIF ÉLECTRIQUE

(30) Priority: 10.05.2022 CN 202221098658 U
(43) Date of publication of application: 15.05.2024
(73) Proprietor: Contemporary Amperex Technology (Hong Kong) Limited, Central, Central And Western District (HK)
(72) Inventor: LV, Pengfei, Ningde, Fujian 352100 (CN); QIU, Yudong, Ningde, Fujian 352100 (CN); ZHAO, Bin, Ningde, Fujian 352100 (CN); ZHONG, Guangyue, Ningde, Fujian 352100 (CN)
(74) Representative: Lorenz Seidler Gossel Part. mbB
(86) International application number: PCT/CN2022/101679
(87) International publication number: WO 2023/216384

(56) References cited:
- WO-A1-2020/026961
- CN-U- 209 496 931
- CN-U- 210 200 839
- CN-U- 210 200 839
- CN-U- 214 043 892
- CN-U- 215 578 920
- DE-A1- 102020 108 703
- US-A1- 2022 115 730

## Description

### TECHNICAL FIELD

This application relates to the field of battery technologies, in particular to a battery and an electric device.

### BACKGROUND

Energy saving and emission reduction are the key to the sustainable development of the automotive industry, and electric vehicles have become an important part of the sustainable development of the automotive industry due to their energy saving and environmental protection advantages. For the electric vehicles, battery technologies are another important factor in development.

In the development of the battery technologies, in addition to improving the performance of batteries, the energy density is also an issue that cannot be ignored. Therefore, how to improve the energy density of the batteries is an urgent technical problem in battery technologies.

CN 210 200 839 U discloses a battery comprising an end plate, which is configured to be arranged between the cell assemblies. The end plate includes a plate body, with multiple slots on each of its two side surfaces for securing cable ties. Each slot extends in the longitudinal direction of the plate body, and the slots on the two side surfaces are arranged in a staggered manner along the height direction of the plate body.

### SUMMARY

An objective of this application is to provide a battery and an electric device, which have a relatively high enery density.

This application is realized by the following technical solutions.

According to a first aspect, this application provides a battery according to the claim 1 of the present application, including: a plurality of battery units, the plurality of battery units being arranged in a first direction; and a bundling assembly, the bundling assembly including a plurality of bundling members and first protective members; the plurality of bundling members being provided in correspondence with the plurality of battery units, and each of the bundling members being configured to bundle a corresponding battery unit; and each first protective member connecting two adjacent bundling members to limit deformation of the bundling members.

According to the battery of embodiments of this application, each first protective member connects two adjacent bundling members, so that the two bundling members are assembled into a whole by the first protective member. When head and tail ends of one of the two bundling members are fixed, a deformation stress of the bundling member is transferred to the other bundling member, and the other bundling member can absorb the deformation stress to resist the deformation of the bundling member, thereby reducing an assembly space between two adjacent battery units, thus saving an overall assembly space of the plurality of battery units, improving a space utilization rate, and making the battery have a higher energy density.

According to the present application, each of the battery units includes a plurality of battery cells arranged in a second direction, and the second direction is perpendicular to the first direction.

In the above solution, the plurality of battery cells are arranged in the second direction to better restrain the deformation of the bundling members.

According to some embodiments of this application, the first protective members are insulating members, configured to insulatingly isolate the battery units and the bundling members.

In the above solution, the first protective members have the property of insulation, which can insulatingly isolate the battery units and the bundling members, and improve the safety of the battery.

According to some embodiments of this application, the first protective member is subjected to injection molding on the two adjacent bundling members.

In the above solution, the first protective member is subjected to injection molding on the bundling members, which can improve connection strength between the first protective member and the two bundling members.

According to some embodiments of this application, each first protective member is arranged on the two adjacent bundling members in a sleeving manner.

In the above solution, each first protective member is arranged on the two adjacent bundling members in the sleeving manner, which ensures stable connection between the first protective member and the two bundling members.

According to some embodiments of this application, the bundling members are rectangular rings, and each first protective member is arranged on portions, close to each other, of the two adjacent bundling members in a sleeving manner.

In the above solution, each first protective member is arranged on the portions, close to each other, of the two adjacent bundling members in the sleeving manner, which improves binding force for the bundling members and reduces the risk of deformation of the bundling members.

According to some embodiments of this application, the plurality of bundling members are located on the same plane, or the two adjacent bundling members are located on different planes.

In the above solution, when the plurality of bundling members are located on the same plane, the two adjacent bundling members can fit together, which can better restrain the bundling members to limit the deformation of the bundling members. When the two adjacent bundling members are located on different planes, the two adjacent bundling members can be disposed in a stacked manner to reduce a gap between two adjacent battery units and further improve the energy density of the battery.

According to some embodiments of this application, the two adjacent bundling members are in contact with each other.

In the above solution, the two adjacent bundling members are in contact to improve the difficulty of deformation of the bundling members and better restrain the bundling members to limit the deformation of the bundling members.

According to some embodiments of this application, two bundling assemblies are provided, the two bundling assemblies are spaced apart in a third direction, and the third direction is perpendicular to the second direction and the first direction.

In the above solution, the two bundling assemblies are spaced apart in the third direction, restraint positions of the plurality of battery cells in the third direction are increased, and a restraint effect on the plurality of battery cells in the third direction is improved.

According to some embodiments of this application, the bundling assembly further includes two second protective members, the two second protective members are disposed on the bundling members, located at two ends, of the plurality of bundling members, respectively, the second protective members and the first protective members are arranged in the first direction, and the second protective members are insulating members, configured to insulatingly isolate the battery units and the bundling members.

In the above solution, the second protective members are disposed on the bundling members at edges, and configured to perform insulation protection on the bundling members and the battery units located at the end portions to improve the insulation effect of the bundling members and the battery units.

According to some embodiments of this application, the second protective members are subjected to injection molding on the bundling members.

In the above solution, the second protective members and the bundling members are integrally formed to ensure that the second protective members and the bundling members have better connection stability.

According to a second aspect, this application provides an electric device, including the battery provided according to the first aspect.

Additional aspects and advantages of this application will be given in part in the following description, in part as will become apparent from the following description, or as will be learned through the practice of this application.

### BRIEF DESCRIPTION OF DRAWINGS

To describe the technical solutions in embodiments of this application more clearly, the following outlines the drawings to be used in embodiments. It should be understood that the drawings below are merely some embodiments of this application and should therefore not be regarded as limiting the scope. A person of ordinary skill in the art may derive other related drawings from such drawings without making any creative efforts.
FIG. 1 is a schematic structural diagram of a vehicle provided according to some embodiments of this application.
FIG. 2 is a schematic diagram of a breakdown structure of a battery provided according to some embodiments of this application.
FIG. 3 is a schematic diagram of a partial structure of a battery provided according to some embodiments of this application.
FIG. 4 is a breakdown diagram of a partial structure of a battery provided according to some embodiments of this application.
FIG. 5 is a schematic diagram of a partial structure of a battery provided according to some other embodiments of this application.
FIG. 6 is a schematic diagram of assembly of a first protective member and two adjacent bundling members provided according to some embodiments of this application.
FIG. 7 is a schematic diagram of assembly of a first protective member and two adjacent bundling members provided according to some other embodiments of this application.
FIG. 8 is a schematic diagram of arrangement of a plurality of bundling members located on the same plane provided according to some embodiments of this application.
FIG. 9 is a schematic diagram of arrangement of a plurality of bundling members located on different planes provided according to some embodiments of this application.
FIG. 10 is a schematic diagram of arrangement of a plurality of bundling members located on different planes provided according to some other embodiments of this application.
FIG. 11 is a schematic diagram of a partial structure of a battery provided according to another embodiments of this application.

In the accompanying drawings, the accompanying drawings are not drawn to the actual scale.

Reference numerals: 100-Battery; 10-Case; 11-First portion; 12-Second portion; 20-Battery unit; 21-Battery cell; 30-Bundling assembly; 31-Bundling member; 311-First section; 312-Second section; 313-Third section; 314-Fourth section; 32-First protective member; 33-Second protective member; 200-Controller; 300-Motor; 1000-Vehicle.

### DETAILED DESCRIPTION OF EMBODIMENTS

Embodiments of the technical solutions of this application will be described in detail below in conjunction with the accompanying drawings. The following embodiments are provided only to more clearly illustrate the technical solutions of this application, and are therefore provided by way of example only, without limiting the scope of protection of this application.

Unless otherwise defined, all technical and scientific terms used herein have the same meaning as commonly understood by a person of ordinary skill in the art to which this application belongs. The terms "comprise", "have" and any variation thereof in the specification and claims of this application as well as the preceding brief description of the drawings are intended to cover a non-exclusive inclusion.

In the description of the embodiments of this application, the technical terms "first", "second" and the like are only used for distinguishing between different objects and are not to be understood as indicating or implying relative importance or implicitly indicating the quantity, a particular order or a primary-secondary relationship of the technical features indicated.

Reference herein to "embodiment" means that particular features, structures, or characteristics described in connection with the embodiments may be included in at least one embodiment of this application. The appearances of the phrase in various places in the specification are not necessarily all referring to the same embodiment, nor are separate or alternative embodiments mutually exclusive of other embodiments. It is to be explicitly and implicitly understood by a person of ordinary skill in the art that the embodiments described herein may be combined with other embodiments.

In the description of the embodiments of this application, the term "and/or" is merely a description of an association relationship of associated objects, indicating that there may be three relationships, for example, A and/or B, which may mean: A, both A and B, and B. In addition, the character "/", as used herein, generally indicates an "or" relationship between the front and back associated objects.

In the description of the embodiments of this application, the term "a plurality of" refers to two or more (including two), similarly, "a plurality of groups" refers to two or more groups (including two groups), and "a plurality of pieces" refers to two or more pieces (including two pieces), unless otherwise expressly and specifically limited.

In the description of the embodiments of this application, the orientation or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential", etc. are based on the orientation or positional relationships shown in the drawings, merely to facilitate the description of the embodiments of this application and simplify the description, and do not indicate or imply that the device or element referred to must have a particular orientation, be constructed and operated in a particular orientation, and thus should not be construed as limiting the embodiments of this application.

In the description of the embodiments of this application, unless otherwise expressly specified and limited, the technical terms "mounted", "connected", "connect", "fixed" and the like are to be understood in a broad sense, for example, it may be a fixed connection, or a detachable connection, or an integral connection; it may also be a mechanical connection or an electrical connection; and it may be a direct connection or indirect connection through an intermediate medium, and may be the interior communication between two elements or the interaction relationship between two elements. For a person of ordinary skill in the art, the specific meaning of the above-mentioned terms in the embodiments of this application may be understood according to specific circumstances.

In this application, a battery referred to means a single physical module that includes a plurality of battery units to provide higher voltage and capacity.

The development of battery technologies should consider various design factors at the same time, such as cycle life, discharge capacity, charge/discharge multiplier and other performance parameters, in addition, the energy density of the battery also needs to be considered.

For the battery, the main energy density level comes from the amount of active material capacity inside the battery. In order to increase the energy density of the battery, it is usually necessary to improve the utilization rate of the space inside the battery.

In the prior art, in order to meet the demand for higher capacity, a plurality of battery units need to be disposed in a case of a battery, each of the battery units has a plurality of battery cells, and the plurality of battery cells are usually restrained and fixed by bundling members (such as steel straps), i.e., after the bundling members surround the plurality of battery cells, two ends of the bundling members are fixed (e.g., welded) into a whole. For example, when the plurality of battery cells are bundled by the steel straps, after the steel straps surround the plurality of battery cells, the two ends of the steel straps are welded into a whole, and the welding makes the stress of the steel straps dispersed, resulting in local deformation and protruding of the steel straps. When the plurality of battery cells are assembled, a receding space for protruding of the steep straps and an assembly space for the steel straps of two adjacent battery units need to be designed and reserved, which leads to low space utilization rate in an arrangement direction of the plurality of battery units and affects the energy density of the battery.

In view of this, in order to solve the problem of low energy density of the battery due to low space utilization rate during the assembly of the plurality of battery units, the applicants, after thorough research, have designed a battery. The battery includes a plurality of battery units and a bundling assembly, the plurality of battery units are arranged in a first direction, the bundling assembly includes a plurality of bundling members and first protective members, the plurality of bundling members are provided in correspondence with the plurality of battery units, each of the bundling members is configured to bundle a corresponding battery unit, and each first protective member connects two adjacent bundling members to limit deformation of the bundling members.

In this battery, each first protective member connects two adjacent bundling members, so that the two bundling members are assembled into a whole by the first protective member. When head and tail ends of one of the two bundling members are fixed, a deformation stress of the bundling member is transferred to the other bundling member, and the other bundling member can absorb the deformation stress to resist the deformation of the bundling member, thereby reducing an assembly space between two adjacent battery units, thus saving an overall assembly space of the plurality of battery units, improving a space utilization rate, and making the battery have a higher energy density.

In this application, battery cells may include lithium-ion secondary batteries, lithium-ion primary batteries, lithium-sulfur batteries, sodium-lithium-ion batteries, sodium-ion batteries or magnesium-ion batteries, etc., which are not limited by the embodiments of this application.

The battery disclosed in the embodiments of this application can be, but is not limited to, used in electric devices such as vehicles, ships or aircraft. The battery disclosed in this application may be used to form a power supply system of the electric device.

Embodiments of this application provide an electric device that uses a battery as a power supply, and the electric device may be, but is not limited to, cell phones, tablet computers, laptop computers, electric toys, power tools, electric bicycles, electric motorcycles, electric cars, ships, spacecraft, etc. The electric toys may include fixed or mobile electric toys, for example, game consoles, electric car toys, electric ship toys and electric airplane toys, etc. The spacecraft may include airplanes, rockets, space shuttles and spaceships, etc.

The following embodiments are illustrated as an example of the electric device as a vehicle of an embodiment of this application for the convenience of illustration.

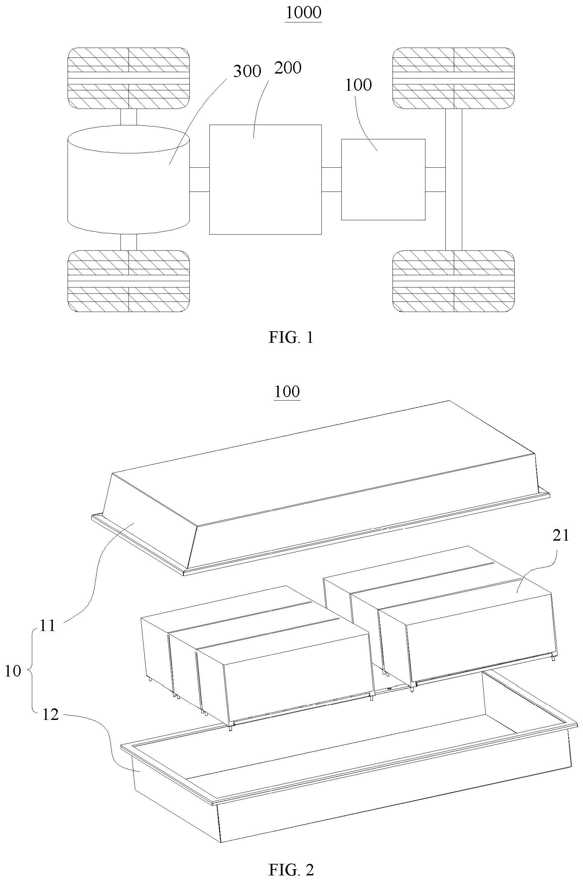

Referring to FIG. 1, FIG. 1 is a schematic structural diagram of a vehicle 1000 provided according to some embodiments of this application. The vehicle 1000 may be a fuel vehicle, a gas vehicle or a new energy vehicle, and the new energy vehicle may be a pure electric vehicle, a hybrid vehicle or an extended-range vehicle, etc. The vehicle 1000 is provided with a battery 100 inside, and the battery 100 may be disposed at a bottom or head or tail of the vehicle 1000. The battery 100 may be configured to power the vehicle 1000, for example, the battery 100 may be used as an operation power supply of the vehicle 1000 and for a circuit system of the vehicle 1000, such as for working power needs of the vehicle 1000 during start-up, navigation, and operation.

The vehicle 1000 may also include a controller 200 and a motor 300, and the controller 200 is configured to control the battery 100 to power the motor 300, such as for the working power needs of the vehicle 1000 during start-up, navigation, and travelling.

In some embodiments of this application, the battery 100 may serve not only as the operation power supply of the vehicle 1000, but also as a driving power supply of the vehicle 1000, replacing or partially replacing fuel or natural gas to provide driving power for the vehicle 1000.

Referring to FIG. 2, FIG. 2 is a schematic diagram of a breakdown structure of a battery 100 provided according to some embodiments of this application. As shown in FIG. 2, the battery 100 may also include a case 10, and a plurality of battery cells 21 are disposed inside the case 10. The case 10 may be of various structures. In some embodiments, the case 10 may include a first portion 11 and a second portion 12, the first portion 11 and the second portion 12 are capped with each other, and the first portion 11 and the second portion 12 together define a containing space configured to contain the battery cells 21. The second portion 12 may be of a hollow structure with an opening at one end, the first portion 11 may be of a plate-like structure, and the first portion 11 caps an opening side of the second portion 12, so that the first portion 11 and the second portion 12 together define the containing space. Both the first portion 11 and the second portion 12 may also be of a hollow structure with an opening on one side, and an opening side of the first portion 11 caps an opening side of the second portion 12.

In the battery 100, the plurality of battery cells 21 may be connected to one another in series or in parallel or in series-parallel connection, and the series-parallel connection means that the plurality of battery cells 21 are connected both in series and in parallel. The battery 100 may also include other structures, for example, the battery 100 may also include a bus component, configured to achieve an electrical connection between the plurality of battery cells 21.

Each of the battery cells 21 may be a secondary battery or a primary battery, and may also be a lithium-sulfur battery, a sodium-ion battery or a magnesium-ion battery, which are not limited thereto.

According to some embodiments of this application, in order to facilitate management of the battery cells 21, the battery 100 may include a battery unit 20, the battery unit 20 includes the plurality of battery cells 21, the plurality of battery cells 21 are arranged in a predetermined direction, and the plurality of battery cells 21 are bundled by bundling members to restrain the plurality of battery cells 21 and avoid positional movement of the battery cells 21.

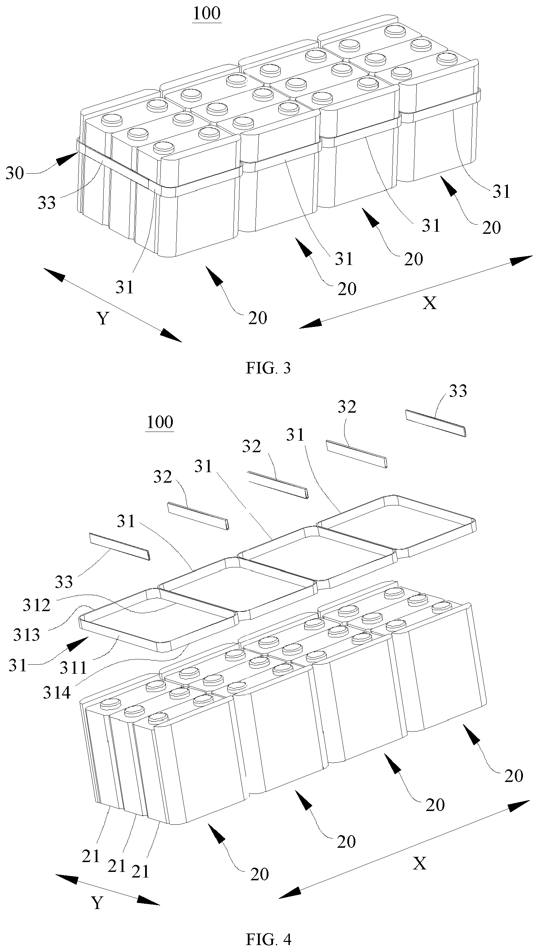

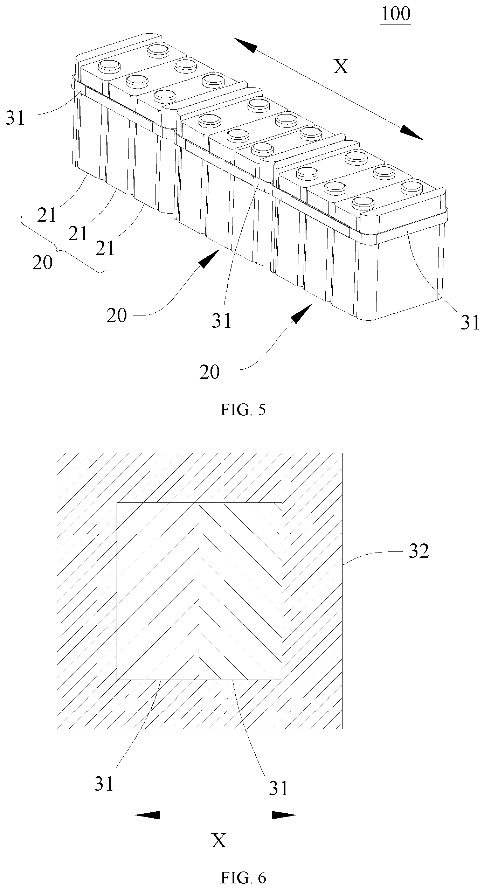

Referring to FIG. 3 and FIG. 4, FIG. 3 is a schematic diagram of a partial structure of a battery 100 provided according to some embodiments of this application, FIG. 4 is a breakdown diagram of a partial structure of a battery 100 provided according to some embodiments of this application, and FIG. 5 is a schematic diagram of a partial structure of a battery provided according to some other embodiments of this application. According to some embodiments of this application, this application provides a battery 100, and the battery 100 includes a plurality of battery units 20 and a bundling assembly 30. The plurality of battery units 20 are arranged in a first direction. The bundling assembly 30 includes a plurality of bundling members 31 and first protective members 32, the plurality of bundling members 31 are provided in correspondence with the plurality of battery units 20, and each of the bundling members 31 is configured to bundle a corresponding battery unit 20; and each first protective member 32 connects two adjacent bundling members 31 to limit deformation of the bundling members 31.

In the figures, a direction shown by the letter X is the first direction, and the first direction X may be a length direction of the battery units 20, or, the first direction X may also be a width direction of the battery units 20.

The battery units 20 include a plurality of battery cells 21, the plurality of battery cells 21 are arranged in a predetermined direction, as shown in FIGS. 3 and 4, and the arrangement direction (predetermined direction) of the plurality of battery cells 21 may be perpendicular to the first direction X, or, as shown in FIG. 5, the arrangement direction (predetermined direction) of the plurality of battery cells 21 may also be parallel to the first direction X.

The plurality of battery units 20 are arranged in the first direction X to reasonably use an internal space of the battery 100, making the battery 100 have a large capacity.

The plurality of bundling members 31 are provided in correspondence with the plurality of battery units 20. In other words, the plurality of bundling members 31 correspond to the plurality of battery units 20 one by one, and each of the bundling members 31 corresponds to one battery unit 20.

The bundling members 31 are components configured to bundle the battery units 20, and are configured to restrain all the battery cells 21 in the battery units 20 into a whole to prevent the battery cells 21 from becoming loose.

The bundling members 31 may be steel straps or other metal materials, which need to have a certain strength and toughness. When the bundling members 31 are the steel straps, the bundling members have better strength, toughness and corrosion resistance.

Head and tail ends of the bundling members 31 are fixed into a whole by welding to ensure the overall strength of the bundling members 31, so that the bundling members 31 have a better bundling effect on the battery units 20.

Every two adjacent bundling members 31 may be connected by at least one first protective member 32, for example, two adjacent bundling members 31 may be connected by the plurality of first protective members 32, and the plurality of first protective members 32 are arranged in a direction perpendicular to the first direction X; or, two adjacent bundling members 31 may be connected by one first protective member 32. Optionally, two adjacent bundling members 31 are connected by a first protective member 32, and the first protective member 32 extends in the direction perpendicular to the first direction X.

According to the battery 100 of embodiments of this application, each first protective member 32 connects two adjacent bundling members 31, so that the two bundling members 31 are assembled into a whole by the first protective member 32. When the head and tail ends of one of the two bundling members 31 are fixed, a deformation stress of the bundling member 31 is transferred to the other bundling member 31, and the other bundling member 31 can absorb the deformation stress to resist the deformation of the bundling member, thereby reducing an assembly space between two adjacent battery units 20, thus saving an overall assembly space of the plurality of battery units 20, improving a space utilization rate, and making the battery 100 have a higher energy density.

According to some embodiments of this application, the first protective members 32 are insulating members, and the first protective members 32 are configured to insulatingly isolate the battery units 20 and the bundling members 31.

The first protective members 32 have the performance of insulation and corrosion resistance, for example, materials of the first protective members 32 may be PE (polyethylene), PVC (polyvinyl chloride), PP (polypropylene), etc.

In the above solution, the first protective members 32 have the property of insulation, which can insulatingly isolate the battery units 20 and the bundling members 31, and improve the safety of the battery 100.

According to some embodiments of this application, each first protective member 32 is subjected to injection molding on the two adjacent bundling members 31.

Each first protective member 32 is subjected to injection molding on the two adjacent bundling members 31. In other words, the first protective member 32 is subjected to injection molding, and the first protective member 32 is molded on the two adjacent bundling members 31, and the first protective member 32 connects the two adjacent bundling members 31 into a whole in a molding process. During assembly, the two adjacent bundling members 31 are disposed in a mold, then molten plastic is injected into the mold, the molten plastic is attached to the two adjacent bundling members 31, and after cooling and molding, the first protective member 32 is attached to the two adjacent bundling members 31.

In the above solution, each first protective member 32 is subjected to injection molding on the bundling members 31, which can improve the connection strength between the first protective member 32 and the two bundling members 31.

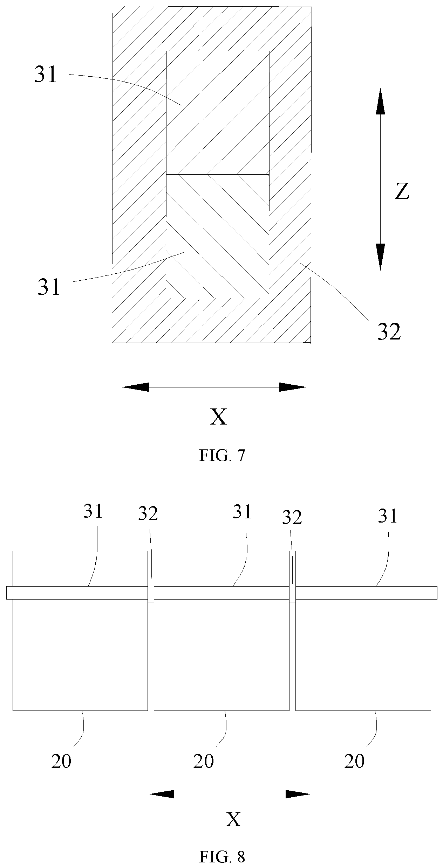

Referring to FIG. 6 and FIG. 7, FIG. 6 is a schematic diagram of assembly of a first protective member 32 and two adjacent bundling members 31 provided according to some embodiments of this application, and FIG. 7 is a schematic diagram of assembly of a first protective member 32 and two adjacent bundling members 31 provided according to some other embodiments of this application. According to some embodiments of this application, each first protective member 32 is arranged on the two adjacent bundling members 31 in a sleeving manner.

In the embodiments where the first protective member 32 is subjected to injection molding on the two adjacent bundling members 31, during assembly, the molten plastic wraps around the two adjacent bundling members 31 and is cooled and molded, so that the first protective member 32 is arranged on the two adjacent bundling members 31 in the sleeving manner.

In other embodiments, the first protective member 32 may be of a ribbon-like structure, the first protective member 32 winds around the periphery of the two adjacent bundling members 31, and after assembly, the first protective member 32 is arranged on the two adjacent bundling members 31 in the sleeving manner.

In the above solution, the first protective member 32 is arranged on the two adjacent bundling members 31 in the sleeving manner, which ensures stable connection between the first protective member 32 and the two bundling members 31.

According to some embodiments of this application, as shown in FIG. 4, the bundling members 31 are rectangular rings, and each first protective member 32 is arranged on portions, close to each other, of the two adjacent bundling members 31 in a sleeving manner.

The bundling members 31 are the rectangular rings to fit the shape of the battery units 20, which conveniently ensures that the bundling members 31 have a good bundling effect on the battery units 20.

It should be noted that each bundling member 31 may include a first section 311 and a second section 312 disposed opposite to each other in the first direction X, and a third section 313 and a fourth section 314 disposed opposite to each other in a second direction Y. The second direction Y is perpendicular to the first direction X. The first section 311, the third section 313, the second section 312 and the fourth section 314 are connected end to end in sequence to form a rectangular ring. Optionally, the first section 311 and the third section 313 have a rounded transition at connection, the first section 311 and the fourth section 314 have a rounded transition at connection, the second section 312 and the third section 313 have a rounded transition at connection, and the second section 312 and the fourth section 314 have a rounded transition at connection, so as to facilitate bending the bundling member 31, and at the same time, to reduce the risk of scratching the battery cells 21 at the corners of the rectangular ring.

The portions, close to each other, of the two bundling members 31 are the portions where the two adjacent bundling members 31 are nearest to each other in the arrangement direction of the plurality of battery units 20.

Each first protective member 32 is arranged on the portions, close to each other, of the two adjacent bundling members 31 in the sleeving manner, so that the first protective member 32 can better connect the two adjacent bundling members 31, have a better restraining force on the bundling members 31, and reduce the risk of deformation of the bundling members 31.

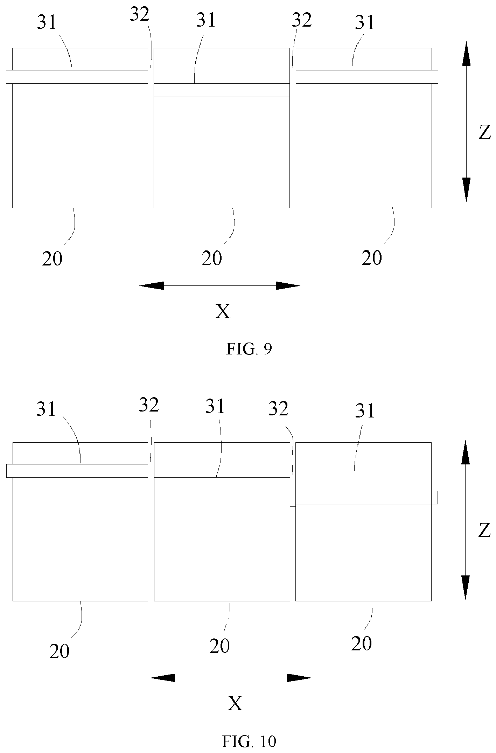

Referring to FIG. 8 to FIG. 10, FIG. 8 is a schematic diagram of arrangement of a plurality of bundling members 31 located on the same plane provided according to some embodiments of this application, FIG. 9 is a schematic diagram of arrangement of a plurality of bundling members 31 located on different planes provided according to some embodiments of this application, and FIG. 10 is a schematic diagram of arrangement of a plurality of bundling members 31 located on different planes provided according to some other embodiments of this application. According to some embodiments of this application, the plurality of bundling members 31 are located on the same plane, or the two adjacent bundling members 31 are located on different planes.

The plurality of bundling members 31 are located on the same plane, which means that two opposite end faces of the plurality of bundling members 31 in a direction perpendicular to the plane are coplanar, for example, as shown in FIG. 8, the plurality of bundling members 31 overlap in the arrangement direction of the plurality of battery units 20.

The two adjacent bundling members 31 are located on different planes, which may have various forms. **In** a first case, the two bundlng members 31 spaced apart may be located on the same plane, in other words, in the first direction X, the odd number of bundling members 31 are located on the same plane and the even number of bundling members 31 are located on another plane. For example, as shown in FIG. 9, presented as an example with the number of bundling members 31 being three, a first bundling member 31 and a third bundling member 31 are located on the same plane and the first bundling member 31 and a second bundling member 31 are not on the same plane. In a second case, as shown in FIG. 10, the plurality of bundling members 31 are arranged sequentially in the direction perpendicular to the first direction X.

In the above solution, when the plurality of bundling members 31 are located on the same plane, the two adjacent bundling members 31 can fit together, which reduces an occupied space, and can better restrain the bundling members 31 to limit the deformation of the bundling members 31. When the two adjacent bundling members 31 are located on different planes, the two adjacent bundling members 31 may be disposed in a stacked manner to reduce a gap between two adjacent battery units 20 and further improve the energy density of the battery 100.

According to some embodiments of this application, as shown in FIG. 6 and FIG. 7, the two adjacent bundling members 31 are in contact with each other.

The two adjacent bundling members 31 are in contact with each other, and a distance between the two adjacent bundling members 31 is small, enabling the first protective member 32 to better restrain the bundling members 31.

In the above solution, the two adjacent bundling members 31 are in contact, when one of the two adjacent bundling members 31 is assembled, the stress of the bundling member 31 can be better transferred to the other bundling member 31, so that the other bundling member 31 consumes part of the deformation stress of the bundling member 31, so as to improve the difficulty of deformation of the bundling members 31, which can better restrain the bundling members 31 to limit the deformation of the bundling members 31.

According to some embodiments of this application, as shown in FIG. 3 and FIG. 4, each of the battery units 20 includes the plurality of battery cells 21 arranged in a second direction Y, and the second direction Y is perpendicular to the first direction X.

In each of the battery units 20, the plurality of battery cells 21 are arranged in the second direction Y. Faces with the largest area of the plurality of battery cells 21 may be disposed adjacent to each other, that is, the second direction Y is perpendicular to the faces with the largest area of the battery cells 21, so as to facilitate the reduction of occupied space and make the plurality of battery cells 21 more compact in structure.

In some embodiments, in order to protect the battery cells 21, end plates may be disposed at both ends of the second direction Y of the battery units 20, and the bundling members 31 bundle the plurality of battery cells 21 and the two end plates into a whole.

When the bundling members 31 bundle the battery units 20, head and tail ends of the bundling members 31 are typically located at end portions of the battery units 20 in the second direction Y. For example, the head and tail ends of the bundling members 31 may be located on sides of the end plates distal to the battery cells 21. When the head and tail ends of the bundling members 31 are fixed into a whole, the bundling members 31 are more easily deformed in the first direction X. The first protective member 32 is disposed between the two adjacent battery units 20 in the first direction X, so as to better restrain the deformation of the bundling members 31.

In the above scheme, the plurality of battery cells 21 are arranged in the second direction Y. Two ends of the bundling members 31 in the first direction X have larger dimensions, and the first protective member 32 connects the two adjacent bundling members 31, so as to better restrain the deformation of the bundling members 31.

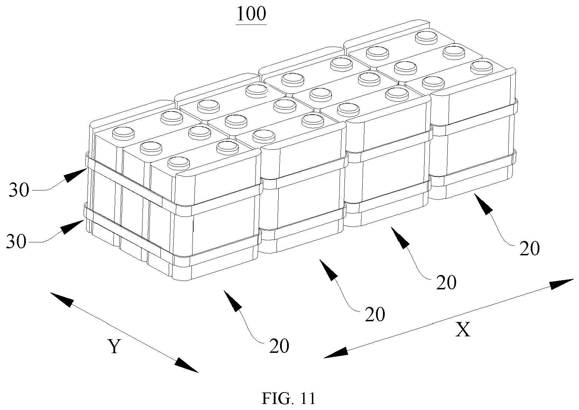

Referring to FIG. 11, FIG. 11 is a schematic diagram of a partial structure of a battery 100 provided according to another embodiments of this application. According to some embodiments of this application, two bundling assemblies 30 are provided, the two bundling assemblies 30 are spaced apart in a third direction, and the third direction is perpendicular to the second direction Y and the first direction X.

In order to facilitate description, the first direction X may be a width direction of the battery units 20, the second direction Y may be a length direction of the battery units 20, and the third direction may be a height direction of the battery units 20. The two bundling assemblies 30 are spaced apart in the third direction. In other words, the two bundling assemblies 30 are disposed in the third direction, and the two bundling assemblies 30 have a gap, for example, the two bundling assemblies 30 may get close to two ends of the battery units 20 in the height direction respectively, thereby having two restraint positions for the battery units 20 in the height direction of the battery units 20.

In the above solution, the two bundling assemblies 30 are spaced apart in the third direction, restraint positions of the plurality of battery cells 21 in the third direction are increased, and a restraint effect of the plurality of battery cells 21 in the third direction is improved.

According to some embodiments of this application, as shown in FIG. 3 and FIG. 4, the bundling assembly 30 further includes two second protective members 33, the two second protective members 33 are disposed on the bundling members 31, located at two ends, of the plurality of bundling members 31, respectively, the second protective members 33 and the first protective members 32 are arranged in the first direction X, the second protective members 33 are insulating members, and the second protective members 33 are configured to insulatingly isolate the battery units 20 and the bundling members 31.

The two second protective members 33 are disposed on the bundling members 31, located at two ends, of the plurality of bundling members 31, respectively. In other words, one of the two second protective members 33 is disposed at an end of the bundling member 31 located at one end in the first direction X of the plurality of bundling members 31, and the other second protective member 33 is disposed at an end of the bundling member 31 located at the other end in the first direction X of the plurality of bundling members 31. That is, on the bundling member 31 located at the end in the first direction X of the plurality of bundling members 31, the first protective member 32 and the second protective member 33 are disposed on two opposite sides of the battery unit 20 bundled by the bundling member 31.

In the above solution, the second protective members 33 are disposed on the bundling members 31 at the end portions of the plurality of bundling members 31, and configured to perform insulation protection on the bundling members 31 and the battery units 20 located at the end portions to improve the insulation effect of the bundling members 31 and the battery units 20.

In the embodiments where the plurality of battery cells 21 of the battery units 20 are arranged in the second direction Y, the second protective members 33 may have the same dimensions in the second direction Y as the first protective members 32 in the second direction Y.

According to some embodiments of this application, the second protective members 33 are subjected to injection molding on the bundling members 31.

The second protective members 33 are subjected to injection molding on the bundling members 31, which means that the bundling members 31 are disposed in a mold, then molten plastic is injected into the mold, and after cooling and molding, the second protective members 33 are attached to the bundling members 31.

The second protective members 33 may be made of the same material as the first protective members 32.

In the above solution, the second protective members 33 are integrally formed with the bundling members 31 to ensure that the second protective members 33 have a better connection stability with the bundling members 31.

According to some embodiments of this application, the second protective members 33 are arranged on the bundling members 31 in a sleeving manner. For example, the second protective members 33 are of a ribbon-like structure, and the second protective members 33 wind around the bundling members 31; or, the second protective members 33 are subjected to injection molding on the bundling members 31, and the second protective members 33 wrap around the bundling members 31.

The second protective members 33 are arranged on the bundling members 31 in a sleeving manner, and the second protective members 33 have a large connection area with the bundling members 31, which makes stable connection of the second protective members 33 and the bundling members 31.

According to some embodiments of this application, this application further provides an electric device, including the battery 100 according to any of the above solutions, and the battery 100 is configured to provide electric energy for the electric device.

The electric device may be any of aforementioned equipment or systems that apply the battery 100.

According to some embodiments of this application, referring to FIG. 3 and FIG. 4, this application provides a battery 100. The battery 100 includes a plurality of battery units 20 and a bundling assembly 30. The plurality of battery units 20 are arranged in a first direction X, each of the battery units 20 includes a plurality of battery cells 21 arranged in a second direction Y, wherein the second direction Y is perpendicular to faces with the largest area of the battery cells 21, and the first direction X is perpendicular to the second direction Y. The bundling assembly 30 includes a plurality of bundling members 31, first protective members 32 and second protective members 33, the plurality of bundling members 31 are provided in correspondence with the plurality of battery units 20, each of the bundling members 31 bundles a corresponding battery unit 20, each first protective member 32 is disposed between two adjacent battery units 20, and each first protective member 32 connects two adjacent bundling members 31 to limit deformation of the bundling members 31. Two second protective members 33 are provided, the two second protective members 33 are disposed on the bundling members 31, located at two ends in the first direction X, of the plurality of bundling members 31, respectively, and the second protective members 33 and the first protective members 32 are arranged in the first direction X. The first protective members 32 and the second protective members 33 are insulating members, configured to insulatingly isolate the battery units 20 and the bundling members 31.

Using an example of the bundling members 31 as steel straps, an assembly process of the battery 100 is described as follows: in the assembly process of the battery 100, the bundling members 31 are prefabricated as rectangular rings; the plurality of bundling members 31 are arranged in the first direction X, and two adjacent bundling members 31 are in contact with each other; each first protective member 32 is subjected to injection molding on the two adjacent bundling members 31, and the first protective member 32 is arranged on the two adjacent bundling members 31 in a sleeving manner; and the second protective members 33 are subjected to injection molding on the bundling members 31, and the second protective members 33 are arranged on the bundling members 31 in a sleeving manner, so as to complete prefabrication of the bundling assembly 30. One battery unit 20 is disposed inside a rectangular ring formed by a corresponding bundling member 31, and head and tail ends of the bundling member 31 are welded and fixed into a whole to complete the bundling of the battery unit 20 by the bundling member 31.

It should be noted that after the fixation of the head and tail ends of the bundling member 31 is completed, a connection part of the head and tail ends of the bundling member 31 may be treated with corrosion protection to prolong the service life of the bundling member 31.

According to the battery 100 of embodiments of this application, each first protective member 32 connects two adjacent bundling members 31, which can save the assembly space, improve the space utilization rate in the battery 100, and make the battery 100 have a higher energy density.

Although this application has been described with reference to preferred embodiments, various improvements can be made. In particular, respective technical features mentioned in the respective embodiments may be combined in any manner as long as there is no structural conflict. This application is not limited to the particular embodiments disclosed herein, but includes all technical solutions falling within the scope of the claims.

## Claims

1. A battery (100), comprising:
a plurality of battery units (20), the plurality of battery units (20) being arranged in a first direction; and
a bundling assembly (30), the bundling assembly (30) comprising a plurality of bundling members (31) and first protective members (32); the plurality of bundling members (31) being provided in correspondence with the plurality of battery units (20), and each bundling member (31) being configured to bundle a corresponding battery unit (20); and each first protective member (32) connecting two adjacent bundling members (31) to limit deformation of the bundling members (31); **characterized in that** each of the battery units (20) comprises a plurality of battery cells (21) arranged in a second direction, and the second direction is perpendicular to the first direction.

2. The battery (100) according to claim 1, wherein the first protective members (32) are insulating members, configured to insulatingly isolate the battery units (20) and the bundling members (31).

3. The battery (100) according to claim 2, wherein each first protective member (32) is subjected to injection molding on the two adjacent bundling members (31).

4. The battery (100) according to any one of claims 1-3, wherein each first protective member (32 is arranged on the two adjacent bundling members (31) in a sleeving manner.

5. The battery (100) according to claim 4, wherein the bundling members (31) are rectangular rings, and each first protective member (32) is arranged on portions, close to each other, of the two adjacent bundling members (31) in a sleeving manner.

6. The battery (100) according to any one of claims 1-5, wherein the plurality of bundling members (31) are located on the same plane, or the two adjacent bundling members (31) are located on different planes.

7. The battery (100) according to any one of claims 1-6, wherein the two adjacent bundling members (31) are in contact with each other.

8. The battery (100) according to claim 1, wherein two bundling assemblies (30) are provided, the two bundling assemblies (30) are spaced apart in a third direction, and the third direction is perpendicular to the second direction and the first direction.

9. The battery (100) according to claim 1 or 8, wherein the bundling assembly (30) further comprises two second protective members (33), the two second protective members (33) are disposed on the bundling members (31), located at two ends, of the plurality of bundling members (31), respectively, the second protective members (33) and the first protective members (32) are arranged in the first direction, and the second protective members (33) are insulating members, configured to insulatingly isolate the battery units (20) and the bundling members (31).

10. The battery (100) according to claim 9, wherein the second protective members (33) are subjected to injection molding on the bundling members (31).

11. An electric device, comprising the battery (100) according to any one of claims 1-10.

## Patentansprüche

1. Batterie (100), umfassend:
eine Vielzahl von Batterieeinheiten (20), wobei die Vielzahl von Batterieeinheiten (20) in einer ersten Richtung angeordnet ist; und
eine Bündelungsanordnung (30), wobei die Bündelungsanordnung (30) eine Vielzahl von Bündelungselementen (31) und erste Schutzelemente (32) umfasst; wobei die Vielzahl von Bündelungselementen (31) entsprechend der Vielzahl von Batterieeinheiten (20) vorgesehen ist und jedes Bündelungselement (31) dazu ausgebildet ist, eine entsprechende Batterieeinheit (20) zu bündeln; und wobei jedes erste Schutzelement (32) zwei benachbarte Bündelungselemente (31) verbindet, um eine Verformung der Bündelungselemente (31) zu begrenzen;
**dadurch gekennzeichnet, dass** jede der Batterieeinheiten (20) eine Vielzahl von in einer zweiten Richtung angeordneten Batteriezellen (21) umfasst und die zweite Richtung senkrecht zur ersten Richtung ist.

2. Batterie (100) nach Anspruch 1, wobei die ersten Schutzelemente (32) Isolierelemente sind, die dazu ausgebildet sind, die Batterieeinheiten (20) und die Bündelungselemente (31) isolierend voneinander zu trennen.

3. Batterie (100) nach Anspruch 2, wobei jedes erste Schutzelement (32) an den zwei benachbarten Bündelungselementen (31) spritzgegossen ist.

4. Batterie (100) nach einem der Ansprüche 1-3, wobei jedes erste Schutzelement (32) in einer umhüllenden Weise an den zwei benachbarten Bündelungselementen (31) angeordnet ist.

5. Batterie (100) nach Anspruch 4, wobei die Bündelungselemente (31) rechteckige Ringe sind und jedes erste Schutzelement (32) in einer umhüllenden Weise an einander nahe liegenden Abschnitten der zwei benachbarten Bündelungselemente (31) angeordnet ist.

6. Batterie (100) nach einem der Ansprüche 1-5, wobei die Vielzahl von Bündelungselementen (31) in derselben Ebene liegt oder die zwei benachbarten Bündelungselemente (31) in unterschiedlichen Ebenen liegen.

7. Batterie (100) nach einem der Ansprüche 1-6, wobei die zwei benachbarten Bündelungselemente (31) miteinander in Kontakt stehen.

8. Batterie (100) nach Anspruch 1, wobei zwei Bündelungsanordnungen (30) vorgesehen sind, die zwei Bündelungsanordnungen (30) in einer dritten Richtung voneinander beabstandet sind und die dritte Richtung senkrecht zur zweiten Richtung und zur ersten Richtung ist.

9. Batterie (100) nach Anspruch 1 oder 8, wobei die Bündelungsanordnung (30) ferner zwei zweite Schutzelemente (33) umfasst, wobei die zwei zweiten Schutzelemente (33) jeweils an den an zwei Enden angeordneten Bündelungselementen (31) der Vielzahl von Bündelungselementen (31) angeordnet sind, die zweiten Schutzelemente (33) und die ersten Schutzelemente (32) in der ersten Richtung angeordnet sind und die zweiten Schutzelemente (33) Isolierelemente sind, die dazu ausgebildet sind, die Batterieeinheiten (20) und die Bündelungselemente (31) isolierend voneinander zu trennen.

10. Batterie (100) nach Anspruch 9, wobei die zweiten Schutzelemente (33) an den Bündelungselementen (31) spritzgegossen sind.

11. Elektrische Vorrichtung, umfassend die Batterie (100) nach einem der Ansprüche 1-10.

## Revendications

1. Batterie (100), comprenant :
une pluralité d'unités de batterie (20), la pluralité d'unités de batterie (20) étant disposée dans une première direction ; et
un ensemble de groupement (30), l'ensemble de groupement (30) comprenant une pluralité d'éléments de groupement (31) et des premiers éléments de protection (32) ; la pluralité d'éléments de groupement (31) étant prévue en correspondance avec la pluralité d'unités de batterie (20), et chaque élément de groupement (31) étant configuré pour regrouper une unité de batterie (20) correspondante ; et chaque premier élément de protection (32) reliant deux éléments de groupement (31) adjacents afin de limiter la déformation des éléments de groupement (31) ;
**caractérisée en ce que** chacune des unités de batterie (20) comprend une pluralité de cellules de batterie (21) disposées dans une deuxième direction, et la deuxième direction est perpendiculaire à la première direction.

2. Batterie (100) selon la revendication 1, dans laquelle les premiers éléments de protection (32) sont des éléments isolants, configurés pour isoler électriquement les unités de batterie (20) et les éléments de groupement (31).

3. Batterie (100) selon la revendication 2, dans laquelle chaque premier élément de protection (32) est moulé par injection sur les deux éléments de groupement (31) adjacents.

4. Batterie (100) selon l'une quelconque des revendications 1 à 3, dans laquelle chaque premier élément de protection (32) est disposé sur les deux éléments de groupement (31) adjacents d'une manière emboîtante.

5. Batterie (100) selon la revendication 4, dans laquelle les éléments de groupement (31) sont des anneaux rectangulaires, et chaque premier élément de protection (32) est disposé, d'une manière emboîtante, sur des portions proches l'une de l'autre des deux éléments de groupement (31) adjacents.

6. Batterie (100) selon l'une quelconque des revendications 1 à 5, dans laquelle la pluralité d'éléments de groupement (31) est située dans un même plan, ou les deux éléments de groupement (31) adjacents sont situés dans des plans différents.

7. Batterie (100) selon l'une quelconque des revendications 1 à 6, dans laquelle les deux éléments de groupement (31) adjacents sont en contact l'un avec l'autre.

8. Batterie (100) selon la revendication 1, dans laquelle deux ensembles de groupement (30) sont prévus, les deux ensembles de groupement (30) étant espacés l'un de l'autre dans une troisième direction, et la troisième direction étant perpendiculaire à la deuxième direction et à la première direction.

9. Batterie (100) selon la revendication 1 ou 8, dans laquelle l'ensemble de groupement (30) comprend en outre deux deuxièmes éléments de protection (33), les deux deuxièmes éléments de protection (33) étant disposés respectivement sur les éléments de groupement (31), situés aux deux extrémités, de la pluralité d'éléments de groupement (31), les deuxièmes éléments de protection (33) et les premiers éléments de protection (32) étant disposés dans la première direction, et les deuxièmes éléments de protection (33) étant des éléments isolants, configurés pour isoler électriquement les unités de batterie (20) et les éléments de groupement (31).

10. Batterie (100) selon la revendication 9, dans laquelle les deuxièmes éléments de protection (33) sont moulés par injection sur les éléments de groupement (31).

11. Dispositif électrique, comprenant la batterie (100) selon l'une quelconque des revendications 1 à 10.
